# EUROPÄISCHE PATENTSCHRIFT

(11) **EP 3 488 516 B1**
(45) Veröffentlichungstag und Bekanntmachung des Hinweises auf die Patenterteilung: **29.12.2021**
(21) Anmeldenummer: 17743304.2
(22) Anmeldetag: 18.07.2017
(51) Int. Cl.: H02K 21/14, H02K 3/47, H02K 15/06

(54) **STÄNDER EINER DREHFELDMASCHINE**
STATOR OF AN ALTERNATING CURRENT MACHINE
STATOR D'UN MACHINE À COURANT ALTERNATIF

(30) Priorität: 21.07.2016 DE 102016113436
(43) Veröffentlichungstag der Anmeldung: 29.05.2019
(73) Patentinhaber: ebm-papst Mulfingen GmbH & Co. KG, 74673 Mulfingen (DE)
(72) Erfinder: HUTH, Gerhard, 97618 Hohenroth-Leutershausen (DE); HE, Jiawei, 67663 Kaiserslautern (DE); KROTSCH, Jens, 97996 Niederstetten (DE); ERNEKER, Roland, 74653 Künzelsau-Amrichhausen (DE); HÜGEL, Otmar, 74653 Künzelsau (DE); HOFMANN, Walter, 74673 Mulfingen-Ailringen (DE)
(74) Vertreter: Staeger & Sperling Partnerschaftsgesellschaft mbB
(86) Internationale Anmeldenummer: PCT/EP2017/068097
(87) Internationale Veröffentlichungsnummer: WO 2018/015372

(56) Entgegenhaltungen:
- DE-A1- 1 814 977
- GB-A- 1 572 417
- JP-A- H1 042 497
- JP-A- 2007 053 867

## Beschreibung

Die Erfindung betrifft ein Ständeraktivteil einer Drehfeldmaschine, insbesondere eines Elektromotors.

Im Stand der Technik sind eine Vielzahl von Elektromotoren mit unterschiedlichster Ausführung von Ständern und Ständerpaketen mit Wicklungen bekannt. So ist z. B. bei bürstenlosen Gleichstrommotoren (BLDC-Motoren) die sogenannte Luftspaltwicklung mit freitragenden Wickelkörpern bekannt.

Typischerweise wird die Wicklung für einen derartigen Wickelkörper zuerst auf einen Dorn aufgebracht, welcher die Spulen während des Wickelvorgangs trägt und in Position hält. Dann wird die typischerweise aus Backlackdraht bestehende Wicklung durch Erhitzen und Verpressen in ihre endgültige Form gebracht, welche der Wickelkörper nach dem Erhitzen beibehält. Anschließend wird der Wickelkörper vom Dorn entformt und kann weiter verarbeitet werden.

Häufig werden bei den Spulen auch sogenannte segmentierte Statorspulen eingesetzt. Diese finden Verwendung, wenn zu den Anforderungen des hohen Füllfaktors und der damit verbundenen orthozyklischen Wicklung noch eine hohe Windungszahl gefordert ist. Sie können vorzugsweise mit der Flyer-Wickeltechnik als auch mit der Linearwickeltechnik hergestellt werden.

Typische Ausführungen sind T-Segmente und gesteckte Spulen. Gesteckte Zahnspulen kommen häufig bei einem sternförmigen Statordesign zum Einsatz, bei dem nach der Montage der Spulen ein Joch montiert wird. Innen genutete Vollblechschnitte lassen sich ebenfalls mit gesteckten Zahnspulen versehen. Alternativ werden Polketten verwendet, die die Vorteile der niedrigen Kontaktzahl des nadelbewickelten Vollblechschnittes mit den Füllfaktor-Vorteilen des linearbewickelten Einzelzahnes kombinieren.

Kleine permanentmagneterregte (PM) Synchronmotoren kommen zunehmend bei hochtourigen Antrieben zum Einsatz. Es handelt sich hier zum Beispiel um hochtourige Kompressor-, Schrauber- oder Textilspindelantriebe. Wegen der hohen Stückzahlen unterliegen diese Antriebe einem hohen Kostendruck. Ziel ist es daher ein Motorkonzept zu entwickeln, das eine möglichst einfache und automatisierfähige Fertigungstechnik ermöglicht.

Wegen der hohen Drehzahlen ist eine schlanke "Trommelläuferbauform" wünschenswert, wobei neben den Dauermagneten der Ständer wesentlich die Kosten solcher Antriebe beeinflusst.

Aktuell wird das Ständeraktivteil mit einem Ständerblechpaket ausgeführt, das aus gestanzten Blechen gestapelt und zum Beispiel durch Backlackverklebung paketiert wird. Alternativ dazu ist es auch möglich, Stanzprozess und Paketierung in Form einer so genannten Stanzpaketierung zu kombinieren. Anschließend wird das Ständerblechpaket mit einer Drehfeldwicklung bewickelt, geschaltet und imprägniert. Bei dieser Ausführung liegt die Drehfeldwicklung in den Nuten des Ständerblechpakets und kann als verteilte Wicklung oder als Zahnspulenwicklung ausgeführt sein.

Bei PM Synchronmotoren mit Luftspaltwicklung besteht das Ständerblechpaket lediglich aus einem Ständerjoch und die Drehfeldwicklung liegt als feinverteilte Wicklung direkt zwischen Ständerjoch und Läufer im Luftspalt. Damit dabei kein über das Ständerjoch hinausragender Wickelkopf entsteht, wird die Luftspaltwicklung als so genannte Schrägwicklung ausgeführt. Es bestehen hierfür unterschiedliche Wicklungsvarianten.

Nachteilig bei solchen Schrägwicklungen ist der Umstand, dass das Wicklungsvolumen allerdings nur teilweise an der Drehmomentbildung beteiligt ist und der daraus resultierende Grundfeld-Wicklungsfaktor in der Größenordnung zwischen 50 und 60 % liegt.

Um diese Nachteile zu umgehen, sind im Stand der Technik ungeschrägte Mehrschichtwicklungen bekannt, bei denen der Wicklungsaufbau mit weiten Überlappungsbereichen der Stränge im Wickelkopfbereich einhergeht sowie entsprechenden Jochpaket-Überständen. Nachteilig ist hierbei, dass eine kostenintensive und aufwändige Phasenisolierung notwendig wird.

Druckschriftlicher Stand der Technik im vorliegenden technischen Gebiet, welcher den Oberbegriff des Anspruchs 1 widerspiegelt, ist in den Dokumenten JP 2007 053 867 A, GB 1 572 417 A, JP H10 424 97 A und DE 18 14 977 A1 offenbart.

Es ist daher Aufgabe der vorliegenden Erfindung vorbesagte Nachteile zu überwinden und ein Ständeraktivteil für einen Elektromotor, vorzugsweise eine permanenterregte Synchronmaschine, vorzusehen, welches einfach und kostengünstig zu montieren ist. Eine weitere Aufgabe ist ein verbessertes und kostengünstiges Verfahren zum Herstellen eines Ständeraktivteils bereitzustellen.

Diese Aufgabe wird durch die Merkmalskombination gemäß unabhängigem Anspruch 1 sowie einem Verfahren mit den Merkmalen von unabhängigem Anspruch 9 gelöst. Vorteilhafte Weiterbildungen der Erfindung werden in den jeweiligen Unteransprüchen beschrieben.

Zur Lösung der vorgenannten Aufgabe wird vorgeschlagen, ein Ständeraktivteil des PM Synchronmotors aus einem Jochpaket, das im Inneren die Luftspaltwicklung trägt, bereit zu stellen, wobei das Jochpaket vorzugsweise aus gestanzten Elektroblechen oder gesintertem SMC-Werkstoff besteht sowie einem spezifisch geformten Spulenträger, in dessen hohlzylinderförmigen Innenraum ein Rotor antriebswirksam anbringbar ist.

Erfindungsgemäß ist weiter vorgesehen, dass die 3-strängige Luftspaltwicklung ohne Überlappung im Wickelkopfbereich realisiert ist, indem eine feinverteilte Wicklung in Analogie zur Zahnspulentechnik ausgeführt ist.

Die Luftspaltwicklung in der erfindungsgemäßen Form wird bevorzugt ungeschrägt in das Jochpaket eingebracht und weist im Wickelkopfbereich keine Phasenüberlappungen auf, so dass ein vergleichsweise einfaches Isoliersystem verwendet werden kann. In einer allgemeinen Ausführung der Erfindung besteht der Ständer aus N Spulen, womit pro Strang beim 3-strängigen Ständer N/3 Spulen verwendet werden, vorliegend jeweils feinverteilte Spulen. Bei beispielsweise N=6 würden zwei feinverteilte Spulen pro Strang verwendet werden.

Im Folgenden wird die Erfindung anhand des zuvor genannten Beispiels mit N=6 und damit N/3=2 feinverteilten Spulen als Spulenpaar näher erläutert, wobei die Erfindung auf andere Spulenanzahlen, somit bei der 3-strängigen Variante auf N = 3, 6, 9, 12 Spulen angewendet ist.

Erfindungsgemäß wird demnach ein Ständeraktivteil für einen Elektromotor, vorzugsweise eine permanenterregte Synchronmaschine vorgeschlagen, bestehend aus einem hohlzylinderförmigen, einen Innenmantel aufweisendem Joch mit einem Aufnahmeraum, in dem ein Spulenträger eingeschoben ist, wobei der Spulenträger aus einem umfangsgeschlossenen, sich in Axialrichtung des Jochs erstreckenden, hohlzylinderförmigen Rohrkörper besteht, an dessen äußerem Mantel eine Mehrzahl aus N Spulenhalterungen ausgebildet sind, wobei auf jeder Spulenhalterungen eines Paars aus Spulenhalterungen jeweils eine feinverteilte in Luftspaltwicklungstechnik gewickelte Spule eines Wicklungsstrangs aus zwei Spulen montiert ist.

In einer bevorzugten Ausgestaltung der Erfindung ist vorgesehen, dass die Wicklungen der Spulen eines jeden Wicklungsstranges im Wickelkopfbereich ohne Wicklungsüberlappungsbereiche ausgeführt sind.

Ebenfalls von Vorteil ist eine Ausgestaltung, bei der die Spulenhalterungen als stegförmige Halterungen ausgebildet sind, die sich entlang der Axialrichtung A des Rohrkörpers erstrecken und mit ihrer radial außenliegenden Stegkante gegen den Innenmantel oder gegen einen Innenmantelabschnitt des Jochs lagern.

Erfindungsgemäß ist vorgesehen, dass die Spulenhalterungen als hohlprofilförmige Spulenhalterungen ausgebildet sind, die sich entlang der Axialrichtung A des Rohrkörpers mit einem Aufnahmeraum zur Aufnahme eines Inlays erstrecken und mit ihrer radial außenliegenden Kammerwand gegen den Innenmantel oder gegen einen Innenmantelabschnitt des Jochs lagern. Zur Flussführung und Steigerung der Aktivteilausnutzung ist es daher sinnvoll, in die Stegbereiche des Spulenträgers so genannte SMC-Inlays zu integrieren. Das kann im einfachsten Fall in Form von SMC-Blöcken geschehen, die direkt bei der Herstellung des Spulenträgers umspritzt werden oder die in passend ausgeführte und als Hohlprofil geformte Inlay-Taschen in den Spulenträger eingesteckt werden.

Zur Unterdrückung störender Parasitäreffekte, zum Beispiel störender Rastmomente, ist es vorteilhaft, wenn die SMC-Inlays nicht blockförmig sondern zahnförmig mit einer breiteren Zahnbasis ausgeführt werden. Bevorzugt ist es, wenn die Querschnittsform der hohlprofilförmigen Spulenhalterungen demnach rechteckig oder zahnförmig ist, wobei auch andere geometrisch geeignete Formen ausgebildet werden können.

In einer besonders bevorzugten Ausgestaltung der Erfindung ist vorgesehen, dass in dem oder den Aufnahmeräumen der hohlprofilförmige Spulenhalterungen jeweils ein einschiebbares Inlay, insbesondere ein einschiebbares SMC-Inlay, vorgesehen ist, so dass je nach Anforderung hierfür besonders angepasste SMC-Materialien verwendet werden können.

Die Stirnflächen der SMC-Inlays sind mit Vorteil elektrisch isoliert und je nach Herstellungsverfahren entweder vollständig von Kunststoff umgeben (im Falle des Umspritzens mit Kunststoff) oder durch zusätzliche Maßnahmen gegenüber der auf den Spulenträgern aufgebrachten Zahnspulen (im Falle des Einschiebens oder Einpressens der Inlays).

Die Querschnittsform der Inlays ist bevorzugt korrespondierend zur jeweiligen Querschnittsform derjenigen hohlprofilförmigen Spulenhalterung ausgebildet, was mittels einer Umspritzung auf kostengünstige Weise herstellbar ist.

Am oder in den Innenmantel des Jochs können ferner mit Vorteil Ausnehmungen oder Positionierrippen für die drehfeste Positionierung des Spulenträgers vorgesehen werden, an denen oder in die die Spulenhalterungen des Spulenträgers zumindest teilweise anliegen oder eingreifen.

Ein weiterer Aspekt der vorliegenden Erfindung betrifft das erfindungsgemäße Verfahren zum Herstellen eines wie zuvor beschriebenen Ständeraktivteils mit den folgenden Schritten:
a. Bereitstellen eines hohlzylinderförmigen Jochs mit einem Aufnahmeraum;
b. Bereitstellen eines Spulenträgers für N Spulen, der je Motor-Phase P N/P Spulenhalterungen aufweist, welche radial nach Außen vom Spulenträger hervorstehen;
c. Wickeln feinverteilter Spule für jede Motor-Phase P aus einem Wickeldraht;
d. Montieren der gewickelten Spulen auf die Spulenhalterungen, so dass die Wicklungen der Spulen eines jeden Wicklungsstranges im Wickelkopfbereich ohne Wicklungsüberlappungsbereiche ausgeführt sind und
e. Einschieben des Spulenträgers zusammen mit den montierten Spulen in den Aufnahmeraum des Jochs.

In einer vorteilhaften Weiterbildung des Verfahren ist vorgesehen, dass das Joch am oder in den Innenmantel des Jochs mit Ausnehmungen oder Positionierrippen für die drehfeste Positionierung des Spulenträgers versehen wird und der Spulenträger mit den Spulenhalterungen so in den Aufnahmeraum des Jochs montiert wird, dass die Spulenhalterungen zumindest teilweise an den Ausnehmungen oder Positionierrippen anliegen oder in diese, vorzugsweise formschlüssig eingreifen.

In einer besonders bevorzugten Ausgestaltung des Verfahrens ist vorgesehen, dass in die jeweiligen Aufnahmeräumen der hohlprofilförmigen Spulenhalterungen ein Inlay, insbesondere ein SMC-Inlay, entweder schon bei der Herstellung des Spulenträgers oder später eingebracht wird.

Erfindungsgemäß sind in den Unteransprüchen gekennzeichnet bzw. werden nachstehend zusammen mit der Beschreibung der bevorzugten Ausführung der Erfindung anhand der Figuren näher dargestellt. So kann als weiterer Arbeitsschritt der Verguss des Ständers mit einer Vergussmasse erfolgen.

Es zeigen:
- Fig. 1: eine perspektivische Ansicht eines Ausführungsbeispiels eines Ständeraktivteils;
- Fig. 2: eine perspektivische Ansicht eines zweiten Ausführungsbeispiels eines Ständeraktivteils;
- Fig. 3: eine perspektivische Ansicht eines dritten Ausführungsbeispiels eines Ständeraktivteils;
- Fig. 4: eine perspektivische Ansicht eines vierten Ausführungsbeispiels eines Ständeraktivteils;
- Fig. 5: eine perspektivische Ansicht eines fünften Ausführungsbeispiels eines Ständeraktivteils;
- Fig. 6: eine schematische Ansicht einer Abwicklung eines Spulenträgers mit Spulen und
- Fig. 7: ein Zonenplan einer zum Beispiel 2-poligen Luftspaltwicklung für drei Wicklungsstränge.

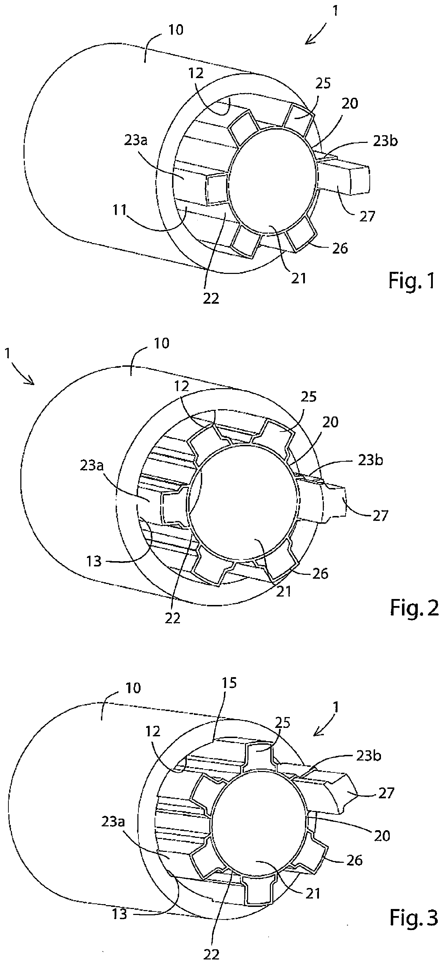

Im Folgenden wird die Erfindung anhand von Ausführungsbeispielen mit Bezug auf die Figuren 1 bis 5 näher beschrieben, wobei gleiche Bezugszeichen auf gleiche funktionale und/oder strukturelle Merkmale hinweisen.

Den Ausführungsbeispielen der Figuren gemeinsam ist ein Ständeraktivteil 1 für einen Elektromotor, vorzugsweise eine permanentmagneterregte Synchronmaschine bestehend aus einem hohlzylinderförmigen Joch 10 mit einem Aufnahmeraum 11. Der Aufnahmeraum 11 wird von einem Innenmantel 12 umgeben.

In den Aufnahmeraum 11 ist ein Spulenträger 20 in der Figur 1 nur teilweise eingeschoben dargestellt. Der Spulenträger 20 besteht aus einem umfangsgeschlossenen, sich in Axialrichtung A des Jochs 10 erstreckenden, hohlzylinderförmigen Rohrkörper 21, der die Basis des Spulenträgers bildet. Der Rohrkörper 21 dieses Ausführungsbeispiels bildet einen äußeren Mantel 22 aus, von dem eine Mehrzahl an diametral gegenüberliegenden Paaren aus je zwei Spulenhalterungen 23a, 23b ausgebildet sind.

In einer einfachen nicht dargestellten Ausführungsform sind diese Spulenhalterungen 23a, 23b aus radial nach außen stehenden Stegen gebildet, die im eingeschobenen Zustand des Spulenträgers 20 bis zum Innenmantel 12 des Jochs 10 ragen.

Auf jeder Spulenhalterung 23a, 23b ist jeweils eine feinverteilte in Zahnspulentechnik gewickelte Spule 30 montiert.

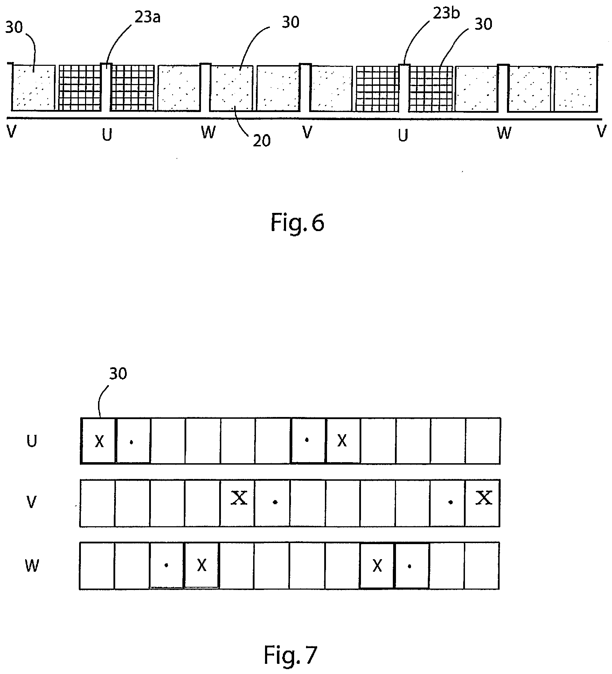

In der Fig. 6 ist eine schematische Ansicht einer Abwicklung eines Spulenträgers 20 mit Spulen 30 für drei Wicklungsstränge U, V, W dargestellt und in der Fig. 7 ein Zonenplan einer 2-poligen Luftspaltwicklung für die drei Wicklungsstränge. Die Wicklungsrichtung der Spulen ergibt sich durch die Symbole "X" und "Punkt", wobei der Zonenplan für den gesamten Umfangswinkel von 360° (bzw. 2π) angegeben ist. Wie aus dem Zonenplan zu erkennen ist, sind jeweils zwei Spulen 30 den jeweils diametral gegenüberliegenden Spulenhalterungen 23a, 23b eines Paars aus Spulenhalterungen 23a, 23b zugeordnet.

Die Spulen 30 eines jeden Wicklungsstranges U, V, W sind im Wickelkopfbereich auf diese Weise ohne Spulenüberlappungsbereiche ausgeführt.

Die Spulenhalterungen 23a, 23b der fünf gezeigten Ausführungsbeispiele sind erfindungsgemäß jeweils diametral gegenüberliegend am Rohrkörper 21 angeordnet bzw. mit diesem einstückig ausgebildet und erstrecken sich radial nach außen in Richtung zum Innenmantel 12 des Jochs 10, um dort am Innenmantel 12 anzuliegen.

Die Spulenhalterungen 23a, 23b sind als hohlprofilförmige Spulenhalterungen ausgebildet und erstrecken sich entlang der Axialrichtung A des Rohrkörpers 2. Die Spulenhalterungen 23a, 23b sind mit einem Aufnahmeraum 25 zur Aufnahme eines Inlays 27 ausgebildet. Die Inlays 27, können wie in den Figuren 1 bis 5 für ein Inlay 27 dargestellt, in den Aufnahmeraum 25 einschieben. I

Die Inlays 27 sind als SMC-Inlay ausgebildet.

SMC-Inlays im Sinne der vorliegenden Erfindung sind Inlays aus einem SMC (soft magnetic composite)-Werkstoff, der ein Verbundwerkstoff aus verdüstem Eisenpulver (FE-Pulver) gebildet wird, die mit dünnen Isolations- und Binderschichten überzogen sind. Ferner sind die SMC-Inlays isotrop hergestellt und weisen bei hohen Frequenzen deutlich geringere Wirbelstromverluste auf als herkömmliche E-Bleche.

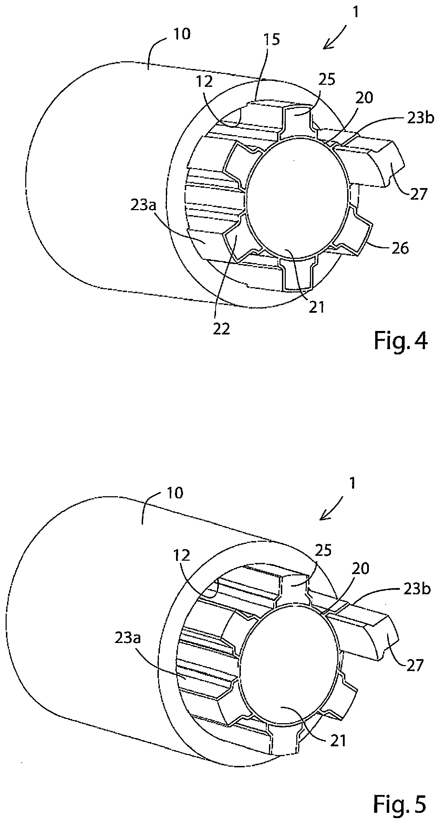

In den Ausführungen gemäß der Figur 1 bis 3 begrenzen radial außenliegende Kammerwände 26 den jeweiligen Aufnahmeraum 25 der Spulenhalterungen 23a, 23b, die gegen den Innenmantel 12, bzw. wie in der Ausführung der Figur 3 gezeigt, gegen einen durch eine Ausnehmung gebildeten Innenmantelabschnitt 13 des Jochs 10 lagern. In den Figuren 4 und 5 sind Ausführungen gezeigt, bei der die radial außenliegende Kammerwände 26 weggelassen wurden und die Inlays 27 unmittelbar gegen den Innenmantel 12 des Jochs 10 anliegen.

In der Figur 1 ist die Querschnittsform der hohlprofilförmigen Spulenhalterungen 23a, 23b rechteckig, während in den Ausführungen gemäß den Figuren 2 bis 5 die Querschnittsform der hohlprofilförmigen Spulenhalterungen 23a, 23b zahnförmig mit einer verbreiterten Basis am Rohrkörper 21 ist. Wie in den Figuren zu erkennen ist, ist die Querschnittsform der Inlays 27 korrespondierend zur jeweiligen Querschnittsform derjenigen hohlprofilförmigen Spulenhalterung 23a, 23b ausgebildet.

In den Ausführungen gemäß den Figuren 3 und 5 wird jeweils ein Formschluss zwischen Ausnehmungen 15 im dem Joch 10 und den Spulenhalterungen 23a, 23b erzielt. Hierzu sind Ausnehmungen 15 in den Innenmantel 12 des Jochs 10 für die drehfeste und lagegenaue Positionierung des Spulenträgers 20 vorgesehen, in die die Spulenhalterungen 23a, 23b des Spulenträgers 20 mit ihrem radial außenliegenden Abschnitt zumindest teilweise hineinragen.

Die Montage nach diesem Ausführungsbeispiel erfolgt dergestalt, dass vorgefertigte, nach dem Zonenplan der Figur 7 gewickelte feinverteilten Spulen 30 für jede Motor-Phase U, V, W, die aus einem Wickeldraht gewickelt sind auf die Spulenhalterungen 23a, 23b montiert werden, so dass die Wicklungen der Spulen 30 eines jeden Wicklungsstranges im Wickelkopfbereich ohne Wicklungsüberlappungsbereiche ausgeführt sind. Danach wird der Spulenträgers 20 zusammen mit den montierten Spulen 30 in den Aufnahmeraum 11 des Jochs 10 eingeschoben. Die SMC-Inlays 27 sind entweder im Spulenträger 20 um spritzt ausgebildet oder werden in die Aufnahmeräume 25, wie zuvor beschrieben, eingeschoben.

Anschließend wird der Stator getränkt oder vergossen oder mit einem anderen gleichwertigen Verfahren behandelt.

Die Erfindung beschränkt sich in ihrer Ausführung nicht auf die vorstehend angegebenen bevorzugten Ausführungsbeispiele. Vielmehr ist eine Anzahl von weiteren Ausführungsvarianten entsprechend den beigefügten Ansprüchen denkbar.

## Patentansprüche

1. Ständeraktivteil (1) für einen Elektromotor mit einer Anzahl an P= 3 Motorphasen (U,V,W), vorzugsweise eine permanentmagneterregte Synchronmaschine, bestehend aus einem hohlzylinderförmigen, einen Innenmantel (12) aufweisendem Joch (10) mit einem Aufnahmeraum (11) in dem ein Spulenträger (20) eingeschoben ist, wobei der Spulenträger (20) aus einem umfangsgeschlossenen, sich in Axialrichtung (A) des Jochs (10) erstreckenden, hohlzylinderförmigen Rohrkörper (21) besteht, an dessen äußerem Mantel (22) eine Mehrzahl an N Spulenhalterungen (23a, 23b) ausgebildet sind, mit N gleich 3, 6, 9 oder 12, wobei auf den Spulenhalterunen (23a, 23b) je Motor-Phase P jeweils N/P feinverteilte in Luftspaltwicklungstechnik gewickelte Spulen (30) montiert sind und die Spulenhalterungen (23a, 23b) gegen einen Innenmantelabschnitt (13) des Innenmantels (12) des Jochs (10) unter Ausbildung von Aufnahmeräumen (25) lagern, **dadurch gekennzeichnet, dass** die Spulenhalterungen (23a, 23b) als hohlprofilförmige Spulenhalterungen (23a, 23b) einstückig mit dem Rohrkörper (21) des Spulenträgers (20) ausgebildet sind, die sich entlang der Axialrichtung (A) des Rohrkörpers (21) mit einem Aufnahmeraum (25) zur Aufnahme eines Inlays (27) erstrecken, wobei die Spulenhalterungen (23a, 23b) jeweils mit einer Kammerwand (26), die sich radial außen befindet, ausgebildet sind, und die jeweiligen Kammerwände (26) gegen den Innenmantel (12) oder gegen einen Innenmantelabschnitt (13) des Jochs (10) lagern.

2. Ständeraktivteil (1) nach Anspruch 1, wobei die Wicklungen der Spulen (30) eines jeden Wicklungsstranges für eine Motorphase P im Wickelkopfbereich ohne Wicklungsüberlappungsbereiche ausgeführt sind.

3. Ständeraktivteil (1) nach Anspruch 1 oder 2, wobei für einen dreisträngigen Motor P = 3 ist und N = 6 gewählt ist, und damit 2 feinverteilte Spulen (30) je Motor-Phase auf die Spulenhalterungen (23a, 23b) gewickelt sind.

4. Ständeraktivteil (1) nach Anspruch 3, **dadurch gekennzeichnet, dass** die Spulenhalterungen (23a, 23b) eines Paars aus Spulenhalterungen (23a, 23b) jeweils diametral gegenüberliegend am Rohrkörper (21) angeordnet sind und sich radial nach außen in Richtung zum Innenmantel (12) des Jochs (10) erstrecken.

5. Ständeraktivteil (1) nach Anspruch 1, **dadurch gekennzeichnet, dass** die Querschnittsform der hohlprofilförmigen Spulenhalterungen (32a, 23b) rechteckig oder zahnförmig ist.

6. Ständeraktivteil (1) nach einem der vorhergehenden Ansprüchen, **dadurch gekennzeichnet, dass** in dem oder den Aufnahmeräumen (25) der hohlprofilförmige Spulenhalterungen (23a, 23b) jeweils ein Inlay (27), insbesondere ein SMC-Inlay, eingeschoben ist.

7. Ständeraktivteil (1) nach einem der vorhergehenden Ansprüchen, **dadurch gekennzeichnet, dass** die Querschnittsform der Inlays (27) korrespondierend zur jeweiligen Querschnittsform derjenigen hohlprofilförmigen Spulenhalterung (23a, 23b) ausgebildet ist, in die das Inlay (27) den Aufnahmeraum (25) ausfüllend eingebracht ist.

8. Ständeraktivteil (1) nach einem der vorhergehenden Ansprüche, **dadurch gekennzeichnet, dass** am oder in den Innenmantel (12) des Jochs (10) Ausnehmungen (15) oder Positionierrippen für die drehfeste Positionierung des Spulenträgers (20) vorgesehen sind an denen oder in die die Spulenhalterungen (23a, 23b) des Spulenträgers (20) zumindest teilweise anliegen oder eingreifen.

9. Verfahren zum Herstellen eines Ständeraktivteils (1) nach einem der Ansprüche 1 bis 8 für einen mehrphasigen Elektromotor mit den folgenden Schritten:
a. Bereitstellen eines hohlzylinderförmigen Jochs (10) mit einem Aufnahmeraum (11);
b. Bereitstellen eines Spulenträgers (20), der je Motor-Phase P, wobei P=3 ist, eine Mehrzahl an N hohlprofilförmige Spulenhalterungen (23a, 23b) , mit N gleich 3, 6, 9 oder 12, mit einem Aufnahmeraum (25) zur Aufnahme eines Inlays (27) für N/P Spulen (30) aufweist, welche radial nach außen vom Spulenträger (20) hervorstehen, **dadurch gekennzeichnet, dass** die Spulenhalterungen (23a, 23b) als hohlprofilförmige Spulenhalterungen (23a, 23b) einstückig mit dem Spulenträgers (20) ausgebildet sind
c. wobei in die jeweiligen Aufnahmeräume (25) ein Inlay (27), insbesondere ein SMC-Inlay, eingebracht wird, Wickeln von N/P feinverteilter Spulen (30) je Motor-Phase P aus einem Wickeldraht;
d. Montieren der gewickelten Spulen (30) auf die Spulenhalterungen (23a, 23b), so dass die Wicklungen der Spulen (30) eines jeden Wicklungsstranges im Wickelkopfbereich ohne Wicklungsüberlappungsbereiche ausgeführt sind;
e. Einschieben des Spulenträgers (20) zusammen mit den montierten Spulen (30) in den Aufnahmeraum (11) des Jochs (10) und
f. Tränken oder Vergiessen des Ständeraktivteils (1).

10. Verfahren nach Anspruch 9, wobei das Joch (10) am oder in den Innenmantel (12) des Jochs (10) mit Ausnehmungen (15) oder Positionierrippen für die drehfeste Positionierung des Spulenträgers (20) versehen wird und der Spulenträger (20) mit den Spulenhalterungen (23a, 23b) so in den Aufnahmeraum (11) des Jochs (10) montiert wird, dass die Spulenhalterungen (23a, 23b) zumindest teilweise an Ausnehmungen (15) oder Positionierrippen anliegen oder in diese, vorzugsweise formschlüssig eingreifen.

## Claims

1. A stator active part (1) for an electric motor having a number of P=3 motor phases (U, V, W), preferably a permanent-magnet-excited synchronous machine, consisting of a hollow-cylindrical yoke (10) comprising an inner cladding (12) and having a receptacle space (11) into which a coil support (20) is inserted, wherein the coil support (20) consists of a peripherally-closed, hollow-cylindrical tubular body (21) extending in the axial direction (A) of the yoke (10), on the outer jacket (22) of said hollow-cylindrical tubular body (21) a plurality of N coil holders (23a, 23b) being formed, wherein N = 3, 6, 9 oder 12, wherein respectively N/P finely-distributed coils (30) wound in air gap winding technique are mounted on the coil holders (23a, 23b) per motor phase P and the coil holders (23a, 23b) bear against an inner cladding section (13) of the inner cladding (12) of the yoke (10) while forming receptacle spaces (25), **characterized in that** said coil holders (23a, 23b) are formed as hollow-profile-shaped coil holders (23a, 23b) integrally formed with said tubular body (21) of said coil support (20), said coil holders (23a, 23b) extending along the axial direction (A) of the tubular body (21), having a receptacle space (25) for receiving an inlay (27), wherein the coil holders (23a, 23b) are formed respectively with a chamber wall (26) arranged radially outwards, and the respective chamber walls (26) bear against the inner cladding (12) or against an inner cladding section (13) of the yoke (10).

2. The stator active part (1) as claimed in claim 1, wherein the windings of the coils (30) of each winding strand for a motor phase P are formed in the winding head region without winding overlap regions.

3. The stator active part (1) as claimed in claim 1 or 2, wherein P = 3 and N = 6 is selected for a three-strand motor, and thus 2 finely-distributed coils (30) per motor phase are wound onto the coil holders (23a, 23b).

4. The stator active part (1) as claimed in claim 3, **characterized in that** the coil holders (23a, 23b) of a pair of coil holders (23a, 23b) are respectively arranged diametrically opposing on the tubular body (21) and extend radially outward in the direction toward the inner cladding (12) of the yoke (10).

5. The stator active part (1) as claimed in claim 1, **characterized in that** the cross-sectional shape of the hollow-profile-shaped coil holders (32a, 23b) is rectangular or tooth-shaped.

6. The stator active part (1) as claimed in any one of the preceding claims, **characterized in that** an inlay (27), in particular an SMC inlay, is respectively inserted into the receptacle space or the receptacle spaces (25) of the hollow-profile-shaped coil holders (23a, 23b).

7. The stator active part (1) as claimed in any one of the preceding claims, **characterized in that** the cross-sectional shape of the inlays (27) is formed corresponding to the respective cross-sectional shape of the hollow-profile-shaped coil holder (23a, 23b) into which the inlay (27) filling the receptacle space (25) is introduced.

8. The stator active part (1) as claimed in any one of the preceding claims, **characterized in that** recesses (15) or positioning ribs for the torque proof positioning of the coil support (20) are provided on or in the inner cladding (12) of the yoke (10), on which or in which recesses (15) or positioning ribs the coil holders (23a, 23b) of the coil support (20) at least partially bear or engage.

9. A method for producing a stator active part (1) as claimed in any one of claims 1 to 8 for a multiphase electric motor, comprising the following steps:
a. providing a hollow-cylindrical yoke (10) having a receptacle space (11);
b. providing a coil support (20), which has a plurality of N hollow-profile-shaped coil holders (23a, 23b), wherein N = 3, 6, 9 or 12, having a receptacle space (25) for receiving an inlay (27) for N/P coils (30) per motor phase P, wherein P = 3, which coils holders (23a, 23b) protrude radially outward from the coil support (20), **characterized in that** said coil holders (23a, 23b) are formed as hollow-profile-shaped coil holders (23a, 23b) integrally formed with said coil support (20);
c. wherein an inlay (27), in particular an SMC inlay, is introduced into the respective receptacle spaces (25), winding of N/P finely-distributed coils (30) per motor phase P from a winding wire;
d. mounting the wound coils (30) on the coil holders (23a, 23b), such that the windings of the coils (30) of each winding strand are formed in the winding head region without winding overlap regions;
e. inserting the coil support (20) together with the mounted coils (30) into the receptacle space (11) of the yoke (10); and
f. impregnating or potting the stator active part (1).

10. The method as claimed in claim 9, wherein the yoke (10) is provided on or in the inner cladding (12) of the yoke (10) with recesses (15) or positioning ribs for the torque proof positioning of the coil support (20) and the coil support (20) having the coil holders (23a, 23b) is mounted in the receptacle space (11) of the yoke (10) in such a way that the coil holders (23a, 23b) at least partially bear on recesses (15) or positioning ribs or engage therein, preferably in a formfitting manner.

## Revendications

1. Partie active de stator (1) pour un moteur électrique avec un nombre de P=3 phases moteur (U, V, W), de préférence un moteur synchrone à excitation par aimants permanents, se composant d'une culasse (10) de forme cylindrique creuse, présentant une enveloppe interne (12) avec un espace de logement (11) dans lequel un porte-bobine (20) est inséré, dans laquelle le porte-bobine (20) se compose d'un corps tubulaire (21) de forme cylindrique creuse, au pourtour fermé, s'étendant dans la direction axiale (A) de la culasse (10), sur l'enveloppe externe (22) duquel une pluralité de N supports de bobine (23a, 23b) sont réalisés, avec N égal à 3, 6, 9 ou 12, dans laquelle respectivement N/P bobines (30) distribuées avec précision enroulées selon la technique de l'enroulement à entrefer sont montées sur les supports de bobine (23a, 23b) par phase moteur P et les supports de bobine (23a, 23b) sont stockés contre une section d'enveloppe interne (13) de l'enveloppe interne (12) de la culasse (10) en formant des espaces de réception (25), **caractérisée en ce que** les supports de bobine (23a, 23b) sont réalisés en tant que supports de bobine (23a, 23b) en forme de profil creux d'un seul tenant avec le corps tubulaire (21) du porte-bobine (20), qui s'étendent le long de la direction axiale (A) du corps tubulaire (21) avec un espace de réception (25) pour la réception d'un inlay (27), dans laquelle les supports de bobine (23a, 23b) sont réalisés respectivement avec une paroi de chambre (26), qui se trouve radialement à l'extérieur, et les parois de chambre (26) respectives sont stockées contre l'enveloppe interne (12) ou contre une section d'enveloppe interne (13) de la culasse (10).

2. Partie active de stator (1) selon la revendication 1, dans laquelle les enroulements des bobines (30) de chaque phase d'enroulement pour une phase moteur P sont réalisés dans la zone de tête d'enroulement sans zones de chevauchement d'enroulement.

3. Partie active de stator (1) selon la revendication 1 ou 2, dans laquelle pour un moteur à trois phases P = 3 et N = 6 est sélectionné, et ainsi 2 bobines (30) distribuées avec précision par phase moteur sont enroulées sur les supports de bobine (23a, 23b).

4. Partie active de stator (1) selon la revendication 3, **caractérisée en ce que** les supports de bobine (23a, 23b) d'une paire de supports de bobine (23a, 23b) sont agencés respectivement de manière diamétralement opposée au corps tubulaire (21) et s'étendent radialement vers l'extérieur en direction de l'enveloppe interne (12) de la culasse (10).

5. Partie active de stator (1) selon la revendication 1, **caractérisée en ce que** la forme de coupe transversale des supports de bobine (32a, 23b) en forme de profil creux est rectangulaire ou en forme de dent.

6. Partie active de stator (1) selon l'une quelconque des revendications précédentes, **caractérisée en ce que** dans la ou les zones de réception (25) des supports de bobine (23a, 23b) en forme de profil creux respectivement un inlay (27), en particulier un inlay SMC est inséré.

7. Partie active de stator (1) selon l'une quelconque des revendications précédentes, **caractérisée en ce que** la forme de coupe transversale des inlays (27) est réalisée de manière à correspondre à la forme de coupe transversale respective du support de bobine (23a, 23b) en forme de profil creux, dans lequel l'inlay (27) est introduit de façon à remplir l'espace de réception (25).

8. Partie active de stator (1) selon l'une quelconque des revendications précédentes, **caractérisée en ce que** des évidements (15) ou des nervures de positionnement pour le positionnement solidaire en rotation du porte-bobine (20) sont prévus sur ou dans l'enveloppe interne (12) de la culasse (10) sur lesquels ou dans lesquels les supports de bobine (23a, 23b) du porte-bobine (20) s'appliquent au moins en partie ou entrent en prise.

9. Procédé de fabrication d'une partie active de stator (1) selon l'une quelconque des revendications 1 à 8 pour un moteur électrique multiphasé avec les étapes suivantes :
a. mise à disposition d'une culasse (10) de forme cylindrique creuse avec un espace de logement (11) ;
b. mise à disposition d'un porte-bobine (20), qui présente par phase moteur P, dans lequel P=3, une pluralité de N supports de bobine (23a, 23b) en forme de profil creux, avec N égal à 3, 6, 9 ou 12, avec un espace de réception (25) pour la réception d'un inlay (27) pour N/P bobines (30), lesquelles font saillie radialement vers l'extérieur du porte-bobine (20), **caractérisé en ce que** les supports de bobine (23a, 23b) sont réalisés en tant que supports de bobine (23a, 23b) en forme de profil creux d'un seul tenant avec le porte-bobine (20)
c. dans lequel un inlay (27), en particulier un inlay SMC, est introduit dans les espaces de réception (25) respectifs, enroulement de N/P bobines (30) distribuées avec précision par phase moteur P à partir d'un fil de bobinage ;
d. montage des bobines (30) enroulées sur les supports de bobine (23a, 23b), de sorte que les enroulements des bobines (30) de chaque phase d'enroulement sont réalisés dans la zone de tête d'enroulement sans zones de chevauchement d'enroulement ;
e. insertion du porte-bobine (20) conjointement avec les bobines (30) montées dans l'espace de logement (11) de la culasse (10) et
f. imprégnation ou coulage de la partie active de stator (1).

10. Procédé selon la revendication 9, dans lequel la culasse (10) est dotée sur ou dans l'enveloppe interne (12) de la culasse (10) d'évidements (15) ou de nervures de positionnement pour le positionnement solidaire en rotation du porte-bobine (20) et le porte-bobine (20) est monté avec les supports de bobine (23a, 23b) dans l'espace de logement (11) de la culasse (10) de sorte que les supports de bobine (23a, 23b) s'appliquent au moins en partie sur les évidements (15) ou nervures de positionnement ou entrent en prise dans ceux-ci, de préférence par complémentarité de forme.
